# EUROPÄISCHE PATENTSCHRIFT

(11) **EP 3 737 879 B1**
(45) Veröffentlichungstag und Bekanntmachung des Hinweises auf die Patenterteilung: **18.11.2026**
(21) Anmeldenummer: 19700265.2
(22) Anmeldetag: 08.01.2019
(51) Int. Cl.: F04B 1/0421, F04B 1/0448, F04B 9/08, F04B 53/02, F04B 53/16, F16J 15/3248, F16J 15/3252, F16J 15/18

(54) **DICHTUNG**
SEAL
JOINT D'ÉTANCHÉITÉ

(30) Priorität: 12.01.2018 DE 102018100637
(43) Veröffentlichungstag der Anmeldung: 18.11.2020
(73) Patentinhaber: Dürr Systems AG, 74321 Bietigheim-Bissingen (DE)
(72) Erfinder: MARTIN, Herbert, 71384 Weinstadt (DE); STIEGLER, Martin, 71717 Beilstein (DE); MAYER, Hannes, 71642 Ludwigsburg (DE); SCHÄFER, Ralf, 71672 Marbach (DE)
(74) Vertreter: v. Bezold & Partner Patentanwälte - PartG mbB
(86) Internationale Anmeldenummer: PCT/EP2019/050326
(87) Internationale Veröffentlichungsnummer: WO 2019/137904

(56) Entgegenhaltungen:
- DE-A1- 4 403 449
- GB-A- 1 085 194
- US-A- 3 511 511
- US-A1- 2006 024 172
- US-A1- 2014 291 936
- US-B1- 6 217 029

## Beschreibung

Die Erfindung betrifft eine Beschichtungsmittelpumpe mit einer Dichtung gemäß dem Oberbegriff des Hauptanspruchs, insbesondere als Stangendichtung zur Abdichtung einer axial beweglichen Stange in einem Führungszylinder, insbesondere als Kolbendichtung für eine pneumatisch, elektrisch oder hydraulisch angetriebene Beschichtungsmittelpumpe zum Pumpen von Beschichtungsmittel.

Aus WO 2015/144317 A1 ist eine pneumatisch angetriebene Beschichtungsmittelpumpe bekannt, die zur Förderung des Beschichtungsmittels (z.B. Lack) mehrere Hydraulikzylinder aufweist, in denen jeweils ein Förderkolben axial verschiebbar ist. Hierbei stellt sich das Problem einer Abdichtung der äußeren Mantelfläche des verschiebbaren Förderkolbens gegenüber der inneren Mantelfläche des Hydraulikzylinders. Für diese Abdichtung werden Ringdichtungen eingesetzt, die in der vorstehend genannten Patentanmeldung nur schematisch dargestellt sind.

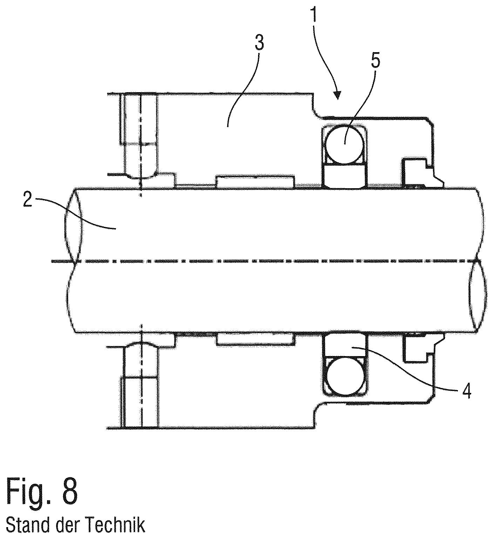

Figur 8 zeigt ein bekanntes Beispiel einer herkömmlichen Dichtung 1 zur Abdichtung einer Stange 2 gegenüber einem Führungszylinder 3, wobei die Dichtung 1 beispielsweise von der deutschen Firma Parker Hannifin GmbH vertrieben wird. Diese bekannte Dichtung 1 besteht im Wesentlichen aus einem ringförmigen Dichtelement 4, das dichtend auf der äußeren Mantelfläche der Stange 2 aufliegt, sowie einem ebenfalls ringförmigen Vorspannelement 5, welches das ringförmige Dichtelement 4 radial außen umgibt und in radialer Richtung nach innen vorspannt.

Nachteilig an dieser bekannten Dichtung 1 ist jedoch die nur einfache Dichtwirkung, da das Dichtelement 4 die einzige Dichtstelle bildet. Dieser Nachteil ist bei der bekannten Dichtung 1 bauartbedingt und kann deshalb nicht umgangen werden.

Zum technischen Hintergrund der Erfindung ist auch hinzuweisen auf DE 27 43 376 A1, US 2011/0 298 183 A1, US 2014/0 291 936 A1,US 3 511 511 A, DE 44 03 449 A1, GB 1 085 194 A, US 6 217 029 B1, US 2006/024172 A1 und DE 10 2005 059 926 A1.

Der Erfindung liegt deshalb die Aufgabe zugrunde, eine Beschichtungsmittelpumpe mit einer verbesserten Dichtung zu schaffen.

Diese Aufgabe wird durch eine erfindungsgemäße Beschichtungsmittelpumpe gemäß dem Hauptanspruch gelöst.

Bei der erfindungsgemäßen Beschichtungsmittelpumpe ist die Dichtung ist als Stangendichtung ausgebildet, um eine axial bewegliche Stange in einem Führungszylinder gegenüber dem Führungszylinder abzudichten.

Gemäß der Erfindung ist die Dichtung also in einer Ringnut in einer Zylinderlauffläche eines Führungszylinders (z.B. Hydraulikzylinder) innen angeordnet und somit ortsfest, wobei das Zylindergehäuse mehrteilig ausgebildet sein kann. Das Dichtelement der Dichtung liegt dann dichtend auf der äußeren Mantelfläche einer Stange (z.B. Kolben) an. Dabei spannt das Vorspannelement das Dichtelement in radialer Richtung nach innen vor, wodurch das Dichtelement gegen die Mantelfläche des Kolbens gedrückt wird.

Beispielsweise kann es sich bei der erfindungsgemäßen Dichtung also um eine Kolbendichtung handeln, die einen axial verschiebbaren Förderkolben in einer Beschichtungsmittelpumpe gegenüber dem umgebenden Hydraulikzylinder abdichtet. Die Erfindung ist jedoch hinsichtlich des Einsatzgebietes der erfindungsgemäßen Dichtung nicht auf Kolbendichtungen in Beschichtungsmittelpumpen beschränkt.

In Übereinstimmung mit der eingangs beschriebenen bekannten Dichtung gemäß Figur 8 weist auch die erfindungsgemäße Dichtung mindestens ein ringförmiges Dichtelement auf, das im montierten Zustand dichtend auf einer Mantelfläche einer axial beweglichen Stange (z.B. Kolben) aufliegt.

Hinsichtlich der Anzahl der ringförmigen Dichtelemente bestehen im Rahmen der Erfindung verschiedene Möglichkeiten. Beispielsweise kann die erfindungsgemäße Dichtung nur ein einziges Dichtelement aufweisen, wie es auch bei der bekannten Dichtung gemäß Figur 8 der Fall ist. Vorzugsweise enthält die erfindungsgemäße Dichtung jedoch zwei ringförmige Dichtelemente, um eine doppelt wirkende Dichtung zu realisieren. Die beiden Dichtelemente liegen dann axial nebeneinander. Darüber hinaus besteht im Rahmen der Erfindung auch die Möglichkeit einer größeren Anzahl (z.B. 3, 4 oder 5) von ringförmigen Dichtelementen in der erfindungsgemäßen Dichtung.

Darüber hinaus enthält auch die erfindungsgemäße Dichtung in Übereinstimmung mit der bekannten Dichtung gemäß Figur 8 ein elastisches und ringförmiges Vorspannelement, welches das ringförmige Dichtelement radial außen umgibt und radial nach innen vorspannt.

Falls die erfindungsgemäße Dichtung mehrere ringförmige Dichtelemente enthält, so kann trotzdem ein einziges Vorspannelement vorgesehen sein, das dann gemeinsam auf die verschiedenen ringförmigen Dichtelemente wirkt. Es besteht jedoch alternativ auch die Möglichkeit, dass den einzelnen ringförmigen Dichtelementen jeweils ein ringförmiges Vorspannelement zugeordnet ist.

Die erfindungsgemäße Dichtung zeichnet sich gegenüber der eingangs beschriebenen bekannten Dichtung durch einen ringförmigen Dichtungsgrundkörper aus, der das mindestens eine Dichtelement und das mindestens eine Vorspannelement radial außen umgibt und hält.

In einem bevorzugten Ausführungsbeispiel der Erfindung umgibt der ringförmige Dichtungsgrundkörper das Dichtelement und das Vorspannelement in axialer Richtung beidseitig, d.h. das Dichtungselement und das Vorspannelement werden an drei Seiten gehalten, nämlich radial außen und in axialer Richtung beidseitig. Es besteht jedoch alternativ auch die Möglichkeit, dass der Dichtungsgrundkörper das Dichtelement und das Vorspannelement in axialer Richtung nur einseitig hält.

In dem bevorzugten Ausführungsbeispiel der Erfindung ist der ringförmige Dichtungsgrundkörper jedoch im Querschnitt im Wesentlichen U-förmig mit zwei Schenkeln, die im Wesentlichen radial verlaufen, und mit einer radial außenliegenden Basis, die im Wesentlichen axial verläuft. Zu den radial verlaufenden Schenkeln ist zu erwähnen, dass diese nicht exakt radial verlaufen müssen, was jedoch bevorzugt ist. Vielmehr besteht auch die Möglichkeit, dass die radial verlaufenden Schenkel des U-förmigen Dichtungsgrundkörpers spitzwinklig zum Radius verlaufen.

Der mehrteilige Aufbau der erfindungsgemäßen Dichtung mit dem Dichtelement und dem separaten Vorspannelement bietet den Vorteil, dass bei der jeweiligen Materialauswahl für das Vorspannelement und das Dichtelement die jeweilige technische Funktion dieser Bauteile berücksichtigt werden kann.

So ist es vorteilhaft, wenn das Dichtelement aus einem härteren Dichtmaterial besteht als das Vorspannelement. Dies ermöglicht nämlich die technische Realisierung verschleißfester Dichtungen, indem ein relativ hartes Dichtungsmaterial für das Dichtelement verwendet wird. Dadurch lässt sich die Standzeit der erfindungsgemäßen Dichtung gegenüber den bekannten Dichtungen wesentlich erhöhen.

Durch das separate Vorspannelement wird hierbei trotzdem erreicht, dass das Dichtelement immer optimal vorgespannt ist, was im Betrieb eine gute Dichtigkeit mit einem geringen Verschleiß kombiniert. Darüber hinaus ist keine manuelle Nachstellung der Dichtung erforderlich, da durch das relativ harte Dichtmaterial des Dichtelements nur ein geringer Verschleiß auftritt. Die optimale Vorspannung des Dichtelements durch das Vorspannelement verhindert auch vorteilhaft, dass das Dichtelement im Betrieb von dem Fluid (z.B. Beschichtungsmittel) unterwandert wird.

In einer Variante der Erfindung ist das ringförmige Dichtelement ringförmig geschlossen.

In einer anderen Variante der Erfindung ist das ringförmige Dichtelement dagegen geschlitzt, d.h. das Dichtelement ist nicht ringförmig geschlossen, sondern durch einen axial durchgehenden Schlitz unterbrochen.

Bei der geschlitzten Variante des ringförmigen Dichtelements bestehen wiederum verschiedene Möglichkeiten hinsichtlich der Anordnung und Ausrichtung des Schlitzes. Beispielsweise kann der Schlitz in dem ringförmigen Dichtelement axial verlaufen. Alternativ besteht die Möglichkeit, dass der Schlitz in dem ringförmigen Dichtelement in Umfangsrichtung schräg verläuft, d.h. in Umfangsrichtung angewinkelt. Ferner besteht auch die Möglichkeit, dass der Schlitz in dem ringförmigen Dichtelement stufenförmig verläuft, insbesondere mit zwei axial äußeren und axial verlaufenden Schlitzabschnitten und einem mittleren Schlitzabschnitt, der in Umfangsrichtung verläuft.

Bei der geschlitzten Variante des ringförmigen Dichtelementes mit dem stufenförmigen Verlauf des Schlitzes kann sich das Dichtelement im Betrieb in Abhängigkeit von einer axialen Druckbelastung auf die Dichtung verformen. Das Dichtelement ist dabei vorzugsweise so konzipiert, dass die freien Enden des ringförmigen geschlitzten Dichtelements im Bereich des in Umfangsrichtung verlaufenden Schlitzabschnitts ohne eine axiale Druckbelastung der Dichtung einen Spalt frei lassen, so dass in axialer Richtung keine Dichtwirkung erzielt wird. Bei einer axialen Druckbelastung auf die Dichtung werden die freien Enden des geschlitzten ringförmigen Dichtelements dagegen in axialer Richtung zusammengedrückt und liegen dann dichtend aufeinander.

Es wurde bereits vorstehend kurz erwähnt, dass im Rahmen der Erfindung auch die Möglichkeit besteht, dass der Dichtungsgrundkörper mehrere ringförmige Dichtelemente enthält, die dann in axialer Richtung nebeneinander in dem Dichtungsgrundkörper liegen. Falls diese Dichtelemente in der vorstehend beschriebenen Weise geschlitzt sind, so sollten die ringförmigen Dichtelemente relativ zueinander so gedreht sein, dass die Schlitze der axial benachbarten Dichtelemente in unterschiedlichen Winkellagen liegen. Durch diese Verdrehung der benachbarten Dichtelemente wird verhindert, dass das jeweilige Fluid (z.B. Beschichtungsmittel) in axialer Richtung durch die in Deckung übereinanderliegenden Schlitze hindurchtreten kann.

Ferner ist zu erwähnen, dass der Dichtungsgrundkörper im montierten Zustand vorzugsweise in einer ringförmigen Aufnahmenut liegt, beispielsweise an der Innenwand eines Hydraulikzylinders. Zur statischen Abdichtung des Dichtungsgrundkörpers gegenüber der ringförmigen Aufnahmenut kann der Dichtungsgrundkörper mindestens eine hervorstehende Dichtlippe aufweisen, die vorzugsweise an einer axialen Stirnfläche des Dichtungsgrundkörpers angeformt ist. Vorzugsweise ist hierbei an den beiden gegenüberliegenden Stirnflächen des Dichtungsgrundkörpers jeweils mindestens eine axial hervorstehende Dichtlippe angeordnet. In den bevorzugten Ausführungsbeispielen der Erfindung sind jedoch beidseitig zwei konzentrische Dichtungslippen angeformt.

Allgemein ist zu erwähnen, dass es sich bei der erfindungsgemäßen Dichtung vorzugsweise um eine dynamische Dichtung handelt, die vorzugsweise für translatorische Bewegungen der Dichtpartner (z.B. Kolben und Hydraulikzylinder) ausgelegt ist.

Ferner ist zu erwähnen, dass das Dichtelement, das Vorspannelement und/oder der Dichtungsgrundkörper vorzugsweise aus einem elastischen Material bestehen.

Hinsichtlich der Materialauswahl für das Dichtelement, das Vorspannelement und den Dichtungsgrundkörper bestehen im Rahmen der Erfindung vielfältige Möglichkeiten. Als mögliche Materialien sind insbesondere Polytetrafluorethylen (PTFE), Polyethylen (PE), Polyurethan (PU), Gummi, Acrylnitril-Butadien-Kautschuk, Polyoxymethylen (POM), Ethylen-Propylen-Dien-Kautschuk, Polyketon und Polyetherimid zu nennen. Die Erfindung ist jedoch hinsichtlich der Materialien für das Dichtelement, das Vorspannelement und den Dichtungsgrundkörper nicht auf die vorstehend genannten Materialien beschränkt, sondern grundsätzlich auch mit anderen Materialien realisierbar. Hierbei ist zu beachten, dass das Dichtelement vorzugsweise aus einem härteren Material besteht als das Vorspannelement und/oder der Dichtungsgrundkörper.

Weiterhin ist zu erwähnen, dass das Dichtelement, das Vorspannelement und/oder der Dichtungsgrundkörper vorzugsweise aus einem Dichtungsmaterial bestehen, das lackbeständig und lösemittelbeständig ist, um einen Einsatz in einer Beschichtungsmittelpumpe zu ermöglichen.

Hinsichtlich des Querschnitts des ringförmigen Dichtelements bestehen im Rahmen der Erfindung vielfältige Möglichkeiten. Vorzugsweise ist der Querschnitt des ringförmigen Dichtelements jedoch eckig, insbesondere rechteckig.

Zu dem Querschnitt des ringförmigen Vorspannelements ist zu erwähnen, dass es sich vorzugsweise um einen runden Querschnitt handelt, insbesondere einen kreisförmigen Querschnitt.

Die Erfindung bietet auch den Vorteil, dass das ringförmige Dichtelement unabhängig von dem Dichtungsgrundkörper und dem Vorspannelement austauschbar ist, wenn dies beispielsweise verschleißbedingt erforderlich sein sollte.

Ferner ist zu erwähnen, dass das Dichtelement vorzugsweise von dem Dichtungsgrundkörper radial nach innen hervorsteht, um eine Abdichtung zu bilden, sofern die Dichtung in einer Zylinderlauffläche ortsfest angeordnet ist und dichtend auf die Mantelfläche eines beweglichen Kolbens drückt. Bei der umgekehrten Anordnung der Dichtung in der äußeren Mantelfläche eines Kolbens ragt das Dichtelement dagegen von dem Dichtungsgrundkörper radial nach außen vor.

Weiterhin ist auch zu erwähnen, dass die erfindungsgemäße Dichtung vorzugsweise aus sehr wenigen Teilen besteht. Bei zwei Dichtelementen in dem Dichtungsgrundkörper besteht die erfindungsgemäße Dichtung dann aus vier Teilen, nämlich dem Dichtungsgrundkörper, dem Vorspannelement und den beiden Dichtelementen. Bei nur einem einzigen Dichtelement in dem Dichtungsgrundkörper besteht die erfindungsgemäße Dichtung dagegen vorzugsweise aus genau drei Teilen, nämlich dem Dichtungsgrundkörper, dem Vorspannelement und dem Dichtelement.

Beispielsweise kann die Beschichtungsmittelpumpe mindestens einen Förderkolben aufweisen, der in einem Hydraulikzylinder axial verschiebbar ist. Der Hydraulikzylinder kann hierbei an seiner Mantelfläche innen eine ringförmig umlaufende Aufnahmenut für die Dichtung aufweisen, wobei die erfindungsgemäße Dichtung in diese Aufnahmenut des Hydraulikzylinders eingesetzt ist. Weitere konstruktive Einzelheiten der Beschichtungsmittelpumpe sind in der bereits eingangs zitierten Patentanmeldung WO 2015/144317 A1 beschrieben, deren Inhalt deshalb der vorliegenden Beschreibung in vollem Umfang zuzurechnen ist.

Andere vorteilhafte Weiterbildungen der Erfindung sind in den Unteransprüchen gekennzeichnet und werden nachstehend zusammen mit der Beschreibung der bevorzugten Ausführungsbeispiele der Erfindung anhand der Figuren näher erläutert. Es zeigen:
- Figur 1: eine erfindungsgemäße Beschichtungsmittelpumpe in einer Perspektivansicht,
- Figur 2: die Beschichtungsmittelpumpe gemäß Figur 1 in einer Schnittansicht,
- Figur 3: eine Schnittansicht der erfindungsgemäßen Dichtung,
- Figur 4: eine Schnittansicht der erfindungsgemäßen Dichtung in einer Aufnahmenut eines Hydraulikzylinders,
- Figur 5A: eine Perspektivansicht des ringförmigen Dichtelements der erfindungsgemäßen Dichtung in einer Perspektivansicht mit einem schräg verlaufenden Schlitz,
- Figur 5B: eine Abwandlung von Figur 5A mit einem axial verlaufenden Schlitz,
- Figur 5C: eine Abwandlung der Figuren 5A und 5B mit einem stufenförmigen Verlauf des Schlitzes,
- Figur 6: eine schematische Perspektivansicht von zwei benachbarten, ringförmigen, geschlitzten Dichtelementen, die relativ zueinander verdreht sind,
- Figur 7: eine nicht erfindungsgemäße Abwandlung von Figur 4, wobei die Dichtung in einer Ringnut in der äußeren Mantelfläche eines Kolbens angeordnet ist, und
- Figur 8: eine Schnittansicht einer herkömmlichen Dichtung.

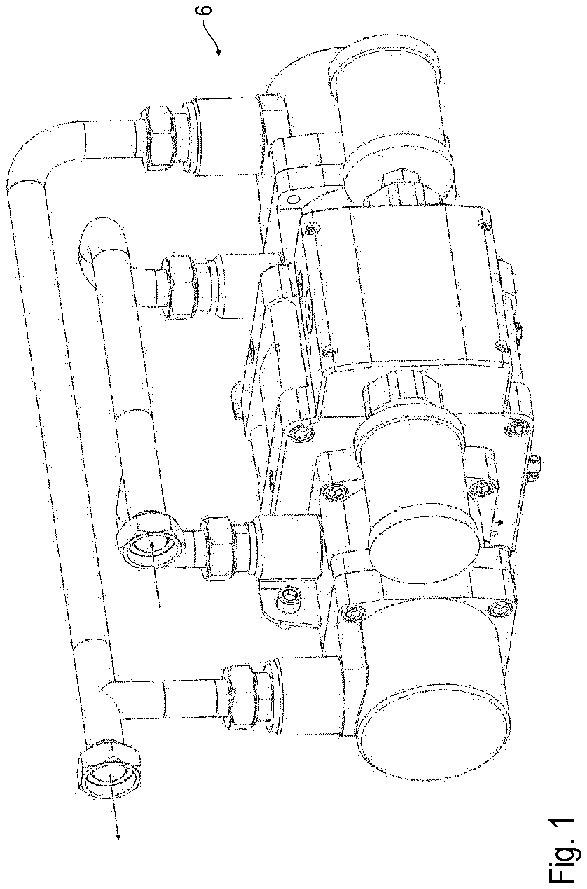

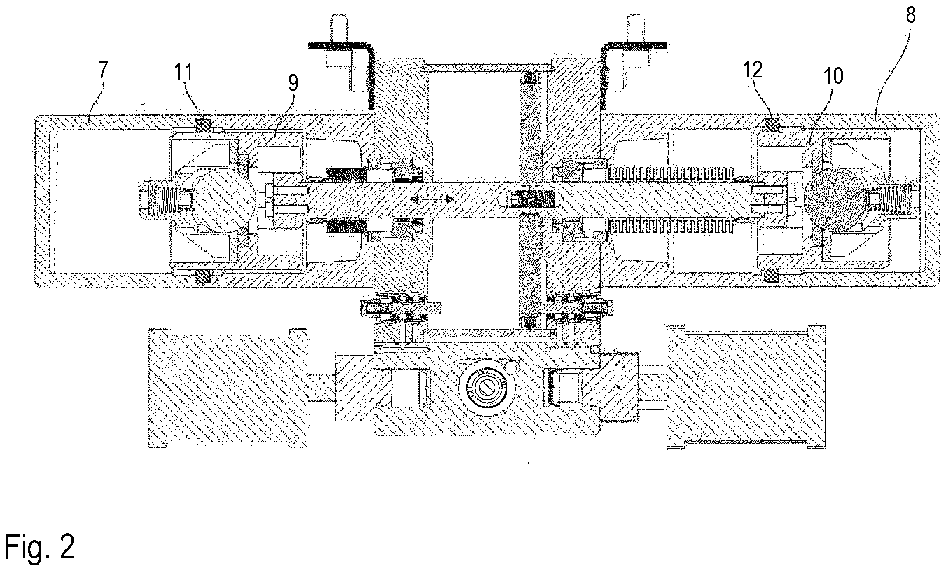

Die Figuren 1 und 2 zeigen verschiedene Ansichten einer erfindungsgemäßen Beschichtungsmittelpumpe 6, die weitgehend herkömmlich aufgebaut ist und hinsichtlich Konstruktion und Funktionsweise in WO 2015/144317 A1 beschrieben ist. Der Inhalt dieser Patentveröffentlichung ist deshalb der vorliegenden Beschreibung hinsichtlich Aufbau und Funktionsweise der Beschichtungsmittelpumpe 6 in vollem Umfang zuzurechnen.

Zur Erläuterung der Erfindung ist lediglich zu erwähnen, dass die Beschichtungsmittelpumpe 6 zwei Hydraulikzylinder 7, 8 aufweist, in denen jeweils ein Kolben 9 bzw. 10 axial verschiebbar ist, wie aus Figur 2 ersichtlich ist.

Zur Abdichtung der Kolben 9, 10 gegenüber der inneren Mantelfläche des Hydraulikzylinders 7 bzw. 8 ist jeweils eine Dichtung 11 bzw. 12 vorgesehen, die in eine ringförmig umlaufende Aufnahmenut in der inneren Mantelfläche des Hydraulikzylinders 7 bzw. 8 eingesetzt ist. Die Dichtungen 11, 12 sind erfindungsgemäß ausgebildet und werden nachfolgend beschrieben.

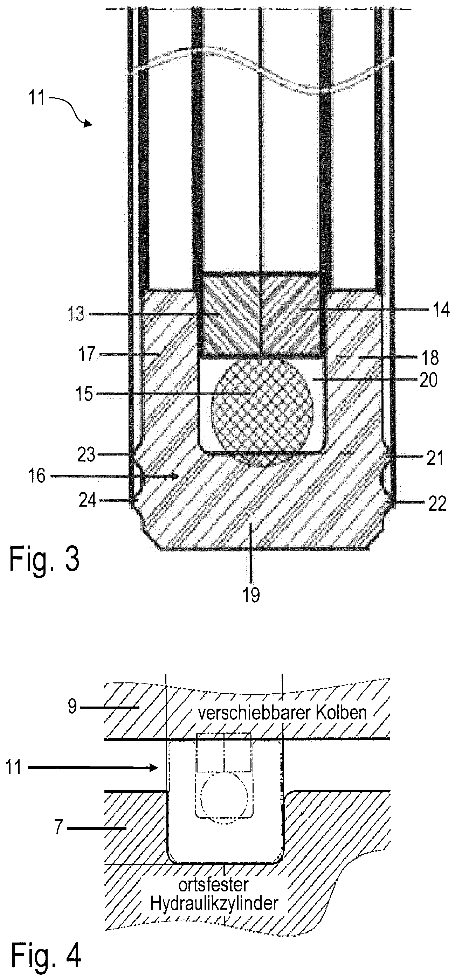

Die Figuren 3 und 4 zeigen nur die Dichtung 11, jedoch ist die Dichtung 12 in gleicher Weise ausgebildet.

Die Dichtung 11 besteht im Wesentlichen aus zwei ringförmigen Dichtelementen 13, 14, einem Vorspannelement 15 und einem Dichtungsgrundkörper 16.

Der Dichtungsgrundkörper 16 ist im Querschnitt im Wesentlichen U-förmig und weist zwei Schenkel 17, 18 auf, die im Wesentlichen radial verlaufen und von einer axial verlaufenden Basis 19 nach innen abstehen.

Die beiden Schenkel 17, 18 und die Basis 19 des Dichtungsgrundkörpers 16 schließen einen Aufnahmeraum 20 ein, wobei in dem Aufnahmeraum 20 das Vorspannelement 15 und die beiden Dichtelemente 13, 14 angeordnet sind.

Die beiden Dichtelemente 13, 14 haben jeweils einen rechteckigen Querschnitt und liegen dichtend an der äußeren Mantelfläche des Kolbens 9 an.

Das Vorspannelement 15 weist dagegen einen kreisförmigen Querschnitt auf und wirkt gemeinsam auf die beiden Dichtelemente 13, 14, indem das Vorspannelement 15 die beiden Dichtelemente 13, 14 radial nach innen vorspannt.

Hierbei ist zu erwähnen, dass die beiden Dichtelemente 13, 14 aus einem härteren Material bestehen als das Vorspannelement 15. Dies ist vorteilhaft, um einen möglichst geringen Verschleiß und eine entsprechend hohe Standzeit der Dichtung 11 zu erreichen.

Weiterhin ist zu erwähnen, dass der Dichtungsgrundkörper 16 an seinen beiden axial gegenüber liegenden Stirnflächen jeweils zwei axial hervorstehende Dichtlippen 21-24 aufweist, um eine statische Abdichtung in der Aufnahmenut für die Dichtung 11 zu bewirken.

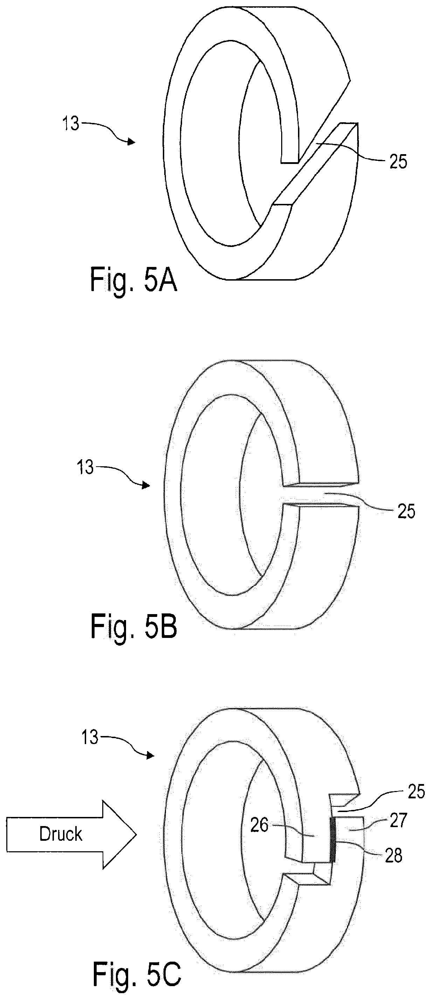

Die Figuren 5A-5C zeigen verschiedene Erfindungsvarianten für das Dichtelement 13, wobei das Dichtelement 14 in gleicher Weise aufgebaut sein kann.

So zeigt Figur 5A eine geschlitzte Variante des Dichtelements 13 mit einem Schlitz 25, der in axialer Richtung durch das Dichtelement 13 durchgeht und in Umfangsrichtung schräg verläuft.

Bei der Abwandlung gemäß Figur 5B verläuft der Schlitz 25 dagegen exakt axial.

Bei der Erfindungsvariante gemäß Figur 5C weist der Schlitz 25 in dem Dichtelement 13 einen stufenförmigen Verlauf auf mit zwei axial verlaufenden Schlitzabschnitten und einem in Umfangsrichtung verlaufenden Schlitzabschnitt dazwischen. Das geschlitzte Dichtelement 13 kann sich hierbei im Betrieb mit seinen freien Enden 26, 27 elastisch verformen und zwar in Abhängigkeit von dem Druck, der in axialer Richtung auf das Dichtelement 13 wirkt, was durch einen Blockpfeil in der Zeichnung dargestellt ist.

Falls keine axiale Druckbelastung anliegt, so liegt zwischen den freien Enden 26, 27 des Dichtelements 13 ein Spalt.

Bei einer axialen Dichtbelastung werden die beiden freien Enden 26, 27 des geschlitzten ringförmigen Dichtelements 13 dagegen in axialer Richtung zusammengedrückt und bilden dann eine Dichtung 28.

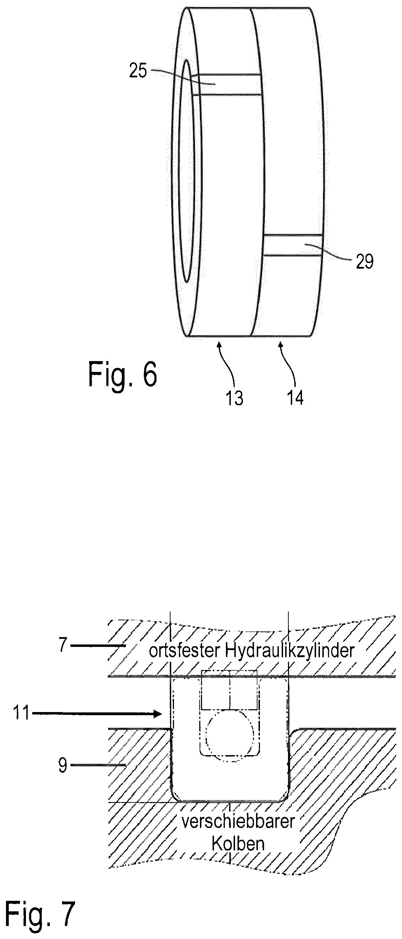

Figur 6 zeigt eine schematische Darstellung der beiden Dichtelemente 13, 14 mit dem Schlitz 25 in dem Dichtelement 13 und einem entsprechenden Schlitz 29 in dem anderen Dichtelement 14.

Hierbei ist zu sehen, dass die beiden Dichtelemente 13, 14 relativ zueinander so verdreht sind, dass die beiden Schlitze 25, 29 in unterschiedlichen Winkellagen liegen. Dadurch wird verhindert, dass ein Fluid (z.B. Beschichtungsmittel) in axialer Richtung durch die Schlitze 25, 29 hindurchtreten kann.

Figur 7 zeigt eine nicht erfindungsgemäße Abwandlung von Figur 4, so dass zur Vermeidung von Wiederholungen auf die vorstehende Beschreibung zu Figur 4 verwiesen wird. Allerdings ist diese Dichtungsanordnung umgekehrt, d.h. die Dichtung 11 ist in einer Ringnut in der äußeren Mantelfläche des Kolbens 9 angeordnet und liegt dichtend auf der inneren Führungsfläche des Hydraulikzylinders 7 an.

Das Vorspannelement 15 spannt hierbei den Dichtungsgrundkörper 19 radial nach innen in die Ringnut in der Mantelfläche des Kolbens 9 vor.

Darüber hinaus stützt sich das Vorspannelement 15 radial innen an dem Dichtungsgrundkörper 16 ab und drückt die Dichtelemente 13, 14 radial nach außen gegen die Zylinderlauffläche des Hydraulikzylinders 7.

### Bezugszeichenliste:

- 1: Dichtung
- 2: Stange
- 3: Führungszylinder
- 4: Dichtelement
- 5: Vorspannelement
- 6: Beschichtungsmittelpumpe
- 7, 8: Hydraulikzylinder
- 9, 10: Kolben
- 11, 12: Dichtung
- 13, 14: Dichtelemente
- 15: Vorspannelement
- 16: Dichtungsgrundkörper
- 17, 18: radiale Schenkel des Dichtungsgrundkörpers
- 19: Basis des Dichtungsgrundkörpers
- 20: Aufnahmeraum des Dichtungsgrundkörpers
- 21-24: Dichtlippen an dem Dichtungsgrundkörper
- 25: Schlitz in dem Dichtelement
- 26, 27: Freie Enden des geschlitzten Dichtelements
- 28: Dichtung zwischen den freien Enden des geschlitzten Dichtelements
- 29: Schlitz

## Patentansprüche

1. Beschichtungsmittelpumpe (6) zum Pumpen von Beschichtungsmittel, mit
a) einem Hydraulikzylinder (7, 8),
b) einem Kolben (9, 10), der in dem Hydraulikzylinder (7, 8) verschiebbar ist,
c) einer ringförmig umlaufenden Aufnahmenut innen in der Mantelfläche des Hydraulikzylinders (7, 8),
d) einer Kolbendichtung (11, 12), die in die Aufnahmenut eingesetzt ist, mit
d1) mindestens einem ringförmigen Dichtelement (13, 14), und
d2) mindestens einem elastischen ringförmigen Vorspannelement (15), wobei das ringförmige Vorspannelement (15) das ringförmige Dichtelement (13, 14) radial außen umgibt und radial nach innen vorspannt,
d3) wobei die Kolbendichtung (11, 12) einen ringförmigen Dichtungsgrundkörper (16) aufweist, der das Dichtelement (13, 14) und das Vorspannelement (15) außen umgibt und hält.

2. Beschichtungsmittelpumpe (6) nach Anspruch 1, **dadurch gekennzeichnet,**
a) **dass** der Dichtungsgrundkörper (16) mit dem Dichtelement (13, 14) und dem Vorspannelement (5) in der Aufnahmenut des Hydraulikzylinders (7) angeordnet ist,
b) **dass** das Dichtelement (13, 14) dichtend auf einer äußeren Mantelfläche des verschiebbaren Kolbens (9) aufliegt.

3. Beschichtungsmittelpumpe (6) nach einem der vorhergehenden Ansprüche, **dadurch gekennzeichnet, dass** der ringförmige Dichtungsgrundkörper (16) das Dichtelement (13, 14) und das Vorspannelement (15) in axialer Richtung beidseitig umgibt.

4. Beschichtungsmittelpumpe (6) nach einem der vorhergehenden Ansprüche, **dadurch gekennzeichnet, dass** der ringförmige Dichtungsgrundkörper (16) im Querschnitt im Wesentlichen U-förmig ist mit zwei Schenkeln (17, 18), die im Wesentlichen radial verlaufen und einer radial außen liegenden Basis (19), die im Wesentlichen axial verläuft.

5. Beschichtungsmittelpumpe (6) nach einem der vorhergehenden Ansprüche,
**dadurch gekennzeichnet,**
a) **dass** das innen liegende ringförmige Dichtelement (13, 14) aus einem anderen Dichtungsmaterial besteht als das umgebende ringförmige Vorspannelement (15), und/oder
b) **dass** das innen liegende Dichtelement (13, 14) aus einem härteren Dichtungsmaterial besteht als das umgebende ringförmige Vorspannelement (15).

6. Beschichtungsmittelpumpe (6) nach einem der vorhergehenden Ansprüche, **dadurch gekennzeichnet, dass** das ringförmige Dichtelement (13, 14) ringförmig geschlossen ist.

7. Beschichtungsmittelpumpe (6) nach einem der Ansprüche 1 bis 5, **dadurch gekennzeichnet, dass** das ringförmige Dichtelement (13, 14) nicht ringförmig geschlossen ist, sondern durch einen axial durchgehenden Schlitz (25) unterbrochen ist.

8. Beschichtungsmittelpumpe (6) nach Anspruch 7, **dadurch gekennzeichnet,**
a) **dass** der Schlitz (25) in dem ringförmigen Dichtelement (13, 14) axial verläuft, oder
b) **dass** der Schlitz (25) in dem ringförmigen Dichtelement (13, 14) in Umfangsrichtung schräg verläuft, oder
c) **dass** der Schlitz (25) in dem ringförmigen Dichtelement (13, 14) stufenförmig verläuft, insbesondere mit zwei äußeren axial verlaufenden Schlitzabschnitten und einem mittleren Schlitzabschnitt, der in Umfangsrichtung verläuft.

9. Beschichtungsmittelpumpe (6) nach Anspruch 8, **dadurch gekennzeichnet,**
a) **dass** der Schlitz (25) in dem ringförmigen Dichtelement (13, 14) stufenförmig verläuft mit zwei äußeren axial verlaufenden Schlitzabschnitten und einem mittleren Schlitzabschnitt, der in Umfangsrichtung verläuft, und
b) **dass** die freien Enden (26, 27) des ringförmigen Dichtelements (13, 14) im Bereich des in Umfangsrichtung verlaufenden Schlitzabschnitts ohne eine axiale Druckbelastung der Kolbendichtung (11, 12) einen Spalt frei lassen,
c) **dass** die freien Enden (26, 27) des ringförmigen Dichtelements im Bereich des in Umfangsrichtung verlaufenden Schlitzabschnitts bei einer axialen Druckbelastung der Kolbendichtung (11, 12) dichtend aufeinander liegen.

10. Beschichtungsmittelpumpe (6) nach einem der vorhergehenden Ansprüche,
**dadurch gekennzeichnet,**
a) **dass** mehrere, insbesondere zwei, ringförmige Dichtelemente (13, 14) vorgesehen sind, die in axialer Richtung nebeneinander in dem Dichtungsgrundkörper (16) liegen,
b) **dass** die axial nebeneinander liegenden ringförmigen Dichtelemente (13, 14) jeweils nicht ringförmig geschlossen sind, sondern durch einen Schlitz (25, 29) unterbrochen sind, und
c) **dass** die axial nebeneinander liegenden ringförmigen Dichtelemente (13, 14) relativ zueinander verdreht sind, so dass die Schlitze (25, 29) der axial benachbarten Dichtelemente (13, 14) in unterschiedlichen Winkellagen liegen.

11. Beschichtungsmittelpumpe (6) nach einem der vorhergehenden Ansprüche,
**dadurch gekennzeichnet,**
a) **dass** der Dichtungsgrundkörper (16) mindestens eine hervorstehende Dichtlippe (21-24) aufweist, insbesondere zur statischen Abdichtung in der ringförmigen Aufnahmenut für die Kolbendichtung (11, 12), oder
b) **dass** der Dichtungsgrundkörper (16) an seinen gegenüber liegenden Stirnflächen jeweils mindestens eine axial hervorstehende Dichtlippe (21-24) aufweist, insbesondere zur statischen Abdichtung in der ringförmigen Aufnahmenut für die Kolbendichtung (11, 12), oder
c) **dass** der Dichtungsgrundkörper (16) an seinen gegenüber liegenden Stirnflächen jeweils mindestens zwei axial hervorstehende und ringförmig umlaufende, konzentrische Dichtlippen (21-24) aufweist, insbesondere zur statischen Abdichtung in der ringförmigen Aufnahmenut für die Kolbendichtung (11, 12).

12. Beschichtungsmittelpumpe (6) nach einem der vorhergehenden Ansprüche,
**dadurch gekennzeichnet,**
a) **dass** die Kolbendichtung (11, 12) eine dynamische Kolbendichtung (11, 12) ist, insbesondere für translatorische Bewegungen der Dichtpartner, und/oder
b) **dass** das Dichtelement (13, 14) und/oder das Vorspannelement (15) und/oder der Dichtungsgrundkörper (16) aus einem elastischen Dichtungsmaterial bestehen, und/oder
c) **dass** das Dichtelement (13, 14) und/oder das Vorspannelement (15) und/oder der Dichtungsgrundkörper (16) aus einem der folgenden Dichtungsmaterialien bestehen:
c1) Polytetrafluorethylen,
c2) Polyethylen, insbesondere hochmolekulares Polyethylen,
c3) Polyurethan, insbesondere thermoplastisches Polyurethan,
c4) Gummi,
c5) Acrylnitril-Butadien-Kautschuk,
c6) Polyoxymethylen,
c7) Ethylen-Propylen-Dien-Kautschuk,
c8) Polyetherimid, und/oder
c9) Polyketon
d) **dass** das Dichtelement (13, 14) und/oder das Vorspannelement (15) und/oder der Dichtungsgrundkörper (16) aus einem Dichtungsmaterial bestehen, das lackbeständig und lösemittelbeständig ist, und/oder
e) **dass** das ringförmige Dichtelement (13, 14) einen eckigen Querschnitt aufweist, insbesondere einen rechteckigen Querschnitt, und/oder
f) **dass** das ringförmige Vorspannelement (15) einen runden Querschnitt aufweist, insbesondere einen kreisförmigen Querschnitt, und/oder
g) **dass** das ringförmige Dichtelement (13, 14) unabhängig von dem Dichtungsgrundkörper (16) und dem Vorspannelement (15) austauschbar ist, und/oder
h) **dass** das Dichtelement (13, 14) von dem Dichtungsgrundkörper (16) radial nach innen hervorsteht, und/oder
i) **dass** die Kolbendichtung (11, 12) aus genau vier Teilen besteht, nämlich den beiden Dichtelementen (13, 14), dem Vorspannelement (15) und dem Dichtungsgrundkörper (16), oder
j) **dass** die Kolbendichtung aus genau drei Teilen besteht, nämlich dem Dichtelement, dem Vorspannelement und dem Dichtungsgrundkörper.

## Claims

1. Coating agent pump (6) for pumping coating agent, with
a) a hydraulic cylinder (7, 8),
b) a piston (9, 10), which is slideable in the hydraulic cylinder (7, 8),
c) an annular receiving groove in the inner surface of the hydraulic cylinder (7, 8),
d) a piston seal (11, 12), which is inserted into the receiving groove, with
d1) at least one annular sealing element (13, 14), and
d2) at least one elastic annular pretensioning element (15), wherein the annular pretensioning element (15) surrounds the annular sealing element (13, 14) radially outwards and pretensions it radially inwards,
d3) wherein the piston seal (11, 12) comprises an annular seal base body (16) which surrounds and holds the sealing element (13, 14) and the pretensioning element (15) on the outside.

2. Coating agent pump (6) according to claim 1, **characterized in**
a) **that** the seal base body (16) with the sealing element (13, 14) and the pretensioning element (5) is arranged in the receiving groove of the hydraulic cylinder (7),
b) **that** the sealing element (13, 14) rests sealingly on an outer circumferential surface of the displaceable piston (9).

3. Coating agent pump (6) according to one of the preceding claims, **characterized in that** the annular seal base body (16) surrounds the sealing element (13, 14) and the pretensioning element (15) on both sides in the axial direction.

4. Coating agent pump (6) according to any of the preceding claims, **characterized in that** the annular seal base body (16) is substantially U-shaped in cross-section with two legs (17, 18) extending substantially radially and a radially outer base (19) extending substantially axially.

5. Coating agent pump (6) according to any of the preceding claims, **characterized in**
a) **that** the inner annular sealing element (13, 14) is made of a different sealing material than the surrounding annular pretensioning element (15), and/or
b) **that** the inner sealing element (13, 14) is made of a harder sealing material than the surrounding annular pretensioning element (15).

6. Coating agent pump (6) according to one of the preceding claims, **characterized in that** the annular sealing element (13, 14) is annularly closed.

7. Coating agent pump (6) according to one of the claims 1 to 6, **characterized in that** the annular sealing element (13, 14) is not closed in an annular manner but is interrupted by an axially continuous slit (25).

8. Coating agent pump (6) according to claim 7, **characterized in**
a) **that** the slit (25) in the annular sealing element (13, 14) runs axially, or
b) **that** the slit (25) in the annular sealing element (13, 14) is inclined in the circumferential direction, or
c) **that** the slit (25) in the annular sealing element (13, 14) runs in a step-like manner, in particular with two outer axially running slit sections and a central slit section which runs in the circumferential direction.

9. Coating agent pump (6) according to claim 8, **characterized in**
a) **that** the slit (25) in the annular sealing element (13, 14) is step-shaped with two outer axially extending slit sections and a central slit section extending in the circumferential direction, and
b) **that** the free ends (26, 27) of the annular sealing element (13, 14) leave a gap free in the region of the slit section extending in the circumferential direction without an axial pressure load on the piston seal (11, 12),
c) **that** the free ends (26, 27) of the annular sealing element in the region of the slit section extending in the circumferential direction lie sealingly on one another when the piston seal (11, 12) is subjected to an axial pressure load.

10. Coating agent pump (6) according to one of the preceding claims, **characterized in**
a) **that** several, in particular two, annular sealing elements (13, 14) are provided, which lie next to each other in the axial direction in the seal base body (16),
b) **that** the axially adjacent annular sealing elements (13, 14) are each not closed in an annular manner, but are interrupted by a slit (25, 29), and
c) **that** the axially adjacent annular sealing elements (13, 14) are rotated relative to one another, so that the slots (25, 29) of the axially adjacent sealing elements (13, 14) lie in different angular positions.

11. Coating agent pump (6) according to one of the preceding claims, **characterized in**
a) **that** the seal base body (16) has at least one projecting sealing lip (21-24), in particular for static sealing in an annular receiving groove for the piston seal (11, 12), or
b) **that** the seal base body (16) has at least one axially projecting sealing lip (21-24) on each of its opposite end faces, in particular for permanent sealing in an annular receiving groove for the piston seal (11, 12), or
c) **that** the seal base body (16) has at least two axially projecting and annular, concentric sealing lips (21-24) on each of its opposite end faces, in particular for static sealing in an annular receiving groove for the piston seal (11, 12).

12. Coating agent pump (6) according to any of the preceding claims, **characterized in**
a) **that** the piston seal (11, 12) is a dynamic piston seal (11, 12), in particular for translatoric movements of the sealing partners, and/or
b) **that** the sealing element (13, 14) and/or the pretensioning element (15) and/or the seal base body (16) consist of an elastic sealing material, and/or
c) **that** the sealing element (13, 14) and/or the pretensioning element (15) and/or the sealing base body (16) consist of one of the following sealing materials:
c1) polytetrafluoroethylene,
c2) polyethylene, in particular high molecular weight polyethylene,
c3) polyurethane, in particular thermoplastic polyurethane
c4) Rubber,
c5) Acrylonitrile butadiene rubber,
c6) polyoxymethylene,
c7) ethylene propylene diene rubber,
c8) polyetherimide, and/or
c9) Polyketone
d) **that** the sealing element (13, 14) and/or the pretensioning element (15) and/or the sealing base body (16) consist of a sealing material which is resistant to paint and solvents, and/or
e) **that** the annular sealing element (13, 14) has an angular cross-section, in particular a rectangular cross-section, and/or
f) **that** the annular pretensioning element (15) has a round cross-section, in particular a circular cross-section, and/or
g) **that** the annular sealing element (13, 14) is replaceable independently of the seal base body (16) and the pretensioning element (15), and/or
h) **that** the sealing element (13, 14) projects radially inwards from the seal base body (16), and/or
i) **that** the piston seal (11, 12) consists of exactly four parts, namely the two sealing elements (13, 14), the pretensioning element (15) and the seal base body (16), or
j) **that** the piston seal consists of exactly three parts, namely the sealing element, the pretensioning element and the seal base body.

## Revendications

1. Pompe de produit de revêtement (6) pour pomper du produit de revêtement, comprenant
a) un cylindre hydraulique (7, 8),
b) un piston (9, 10), qui est déplaçable dans le cylindre hydraulique (7, 8),
c) une gorge de réception annulaire périphérique à l'intérieur de la surface de manteau du cylindre hydraulique (7, 8),
d) un joint de piston (11, 12), qui est inséré dans la gorge de réception, comprenant
d1) au moins un élément d'étanchéité annulaire (13, 14), et
d2) au moins un élément de précontrainte annulaire élastique (15), l'élément de précontrainte annulaire (15) entourant radialement à l'extérieur l'élément d'étanchéité annulaire (13, 14) et le précontraignant radialement vers l'intérieur,
d3) dans lequel le joint de piston (11, 12) présente un corps de base d'étanchéité annulaire (16), qui entoure et maintient à l'extérieur l'élément d'étanchéité (13, 14) et l'élément de précontrainte (15).

2. Pompe de produit de revêtement (6) selon la revendication 1, **caractérisée en ce que**
a) le corps de base d'étanchéité (16) avec l'élément d'étanchéité (13, 14) et l'élément de précontrainte (5) est disposé dans la gorge de réception du cylindre hydraulique (7),
b) l'élément d'étanchéité (13, 14) repose de manière étanche sur une surface de manteau extérieure du piston déplaçable (9).

3. Pompe de produit de revêtement (6) selon l'une des revendications précédentes, **caractérisée en ce que** le corps de base d'étanchéité annulaire (16) entoure l'élément d'étanchéité (13, 14) et l'élément de précontrainte (15) des deux côtés en direction axiale.

4. Pompe de produit de revêtement (6) selon l'une des revendications précédentes, **caractérisée en ce que** le corps de base d'étanchéité annulaire (16) est essentiellement en forme de U en section transversale avec deux branches (17, 18) qui s'étendent essentiellement radialement et une base (19) située radialement à l'extérieur, qui s'étend essentiellement axialement.

5. Pompe de produit de revêtement (6) selon l'une des revendications précédentes,
**caractérisée en ce que**
a) l'élément d'étanchéité annulaire situé à l'intérieur (13, 14) est constitué d'un matériau d'étanchéité différent de celui de l'élément de précontrainte annulaire environnant (15), et/ou
b) l'élément d'étanchéité situé à l'intérieur (13, 14) est constitué d'un matériau d'étanchéité plus dur que celui de l'élément de précontrainte annulaire environnant (15).

6. Pompe de produit de revêtement (6) selon l'une des revendications précédentes, **caractérisée en ce que** l'élément d'étanchéité annulaire (13, 14) est annulaire fermé.

7. Pompe de produit de revêtement (6) selon l'une des revendications 1 à 5, **caractérisée en ce que** l'élément d'étanchéité annulaire (13, 14) n'est pas annulaire fermé, mais est interrompu par une fente (25) axiale continue.

8. Pompe de produit de revêtement (6) selon la revendication 7, **caractérisée en ce que**
a) la fente (25) dans l'élément d'étanchéité annulaire (13, 14) s'étend axialement, ou
b) la fente (25) dans l'élément d'étanchéité annulaire (13, 14) s'étend obliquement en direction périphérique, ou
c) la fente (25) dans l'élément d'étanchéité annulaire (13, 14) s'étend en forme d'escalier, en particulier avec deux sections de fente extérieures s'étendant axialement et une section de fente centrale qui s'étend en direction périphérique.

9. Pompe de produit de revêtement (6) selon la revendication 8, **caractérisée en ce que**
a) la fente (25) dans l'élément d'étanchéité annulaire (13, 14) s'étend en forme d'escalier avec deux sections de fente extérieures s'étendant axialement et une section de fente centrale qui s'étend en direction périphérique, et
b) les extrémités libres (26, 27) de l'élément d'étanchéité annulaire (13, 14) dans la zone de la section de fente s'étendant en direction périphérique laissent libre un espace sans contrainte de pression axiale du joint de piston (11, 12),
c) les extrémités libres (26, 27) de l'élément d'étanchéité annulaire dans la zone de la section de fente s'étendant en direction périphérique reposent de manière étanche l'une contre l'autre lors d'une contrainte de pression axiale du joint de piston (11, 12).

10. Pompe de produit de revêtement (6) selon l'une des revendications précédentes,
**caractérisée en ce que**
a) plusieurs, en particulier deux, éléments d'étanchéité annulaires (13, 14) sont prévus, qui sont disposés côte à côte en direction axiale dans le corps de base d'étanchéité (16),
b) les éléments d'étanchéité annulaires (13, 14) disposés côte à côte axialement ne sont respectivement pas annulaires fermés, mais sont interrompus par une fente (25, 29), et
c) les éléments d'étanchéité annulaires (13, 14) disposés côte à côte axialement sont tournés l'un par rapport à l'autre, de sorte que les fentes (25, 29) des éléments d'étanchéité (13, 14) adjacents axialement se trouvent dans des positions angulaires différentes.

11. Pompe de produit de revêtement (6) selon l'une des revendications précédentes,
**caractérisée en ce que**
a) le corps de base d'étanchéité (16) présente au moins une lèvre d'étanchéité (21-24) saillante, en particulier pour l'étanchéité statique dans la gorge de réception annulaire pour le joint de piston (11, 12), ou
b) le corps de base d'étanchéité (16) présente sur ses faces frontales opposées au moins une lèvre d'étanchéité (21-24) saillante axialement, en particulier pour l'étanchéité statique dans la gorge de réception annulaire pour le joint de piston (11, 12), ou
c) le corps de base d'étanchéité (16) présente sur ses faces frontales opposées au moins deux lèvres d'étanchéité (21-24) saillantes axialement et annulaires périphériques, concentriques, en particulier pour l'étanchéité statique dans la gorge de réception annulaire pour le joint de piston (11, 12).

12. Pompe de produit de revêtement (6) selon l'une des revendications précédentes,
**caractérisée en ce que**
a) le joint de piston (11, 12) est un joint de piston dynamique (11, 12), en particulier pour des mouvements de translation des partenaires d'étanchéité, et/ou
b) l'élément d'étanchéité (13, 14) et/ou l'élément de précontrainte (15) et/ou le corps de base d'étanchéité (16) sont constitués d'un matériau d'étanchéité élastique, et/ou
c) l'élément d'étanchéité (13, 14) et/ou l'élément de précontrainte (15) et/ou le corps de base d'étanchéité (16) sont constitués de l'un des matériaux d'étanchéité suivants :
c1) polytétrafluoroéthylène,
c2) polyéthylène, en particulier polyéthylène à haut poids moléculaire,
c3) polyuréthane, en particulier polyuréthane thermoplastique,
c4) caoutchouc,
c5) caoutchouc acrylonitrile-butadiène,
c6) polyoxyméthylène,
c7) caoutchouc éthylène-propylène-diène,
c8) polyétherimide, et/ou
c9) polykétone
d) l'élément d'étanchéité (13, 14) et/ou l'élément de précontrainte (15) et/ou le corps de base d'étanchéité (16) sont constitués d'un matériau d'étanchéité résistant à la peinture et résistant aux solvants, et/ou
e) l'élément d'étanchéité annulaire (13, 14) présente une section transversale angulaire, en particulier une section transversale rectangulaire, et/ou
f) l'élément de précontrainte annulaire (15) présente une section transversale ronde, en particulier une section transversale circulaire, et/ou
g) l'élément d'étanchéité annulaire (13, 14) est interchangeable indépendamment du corps de base d'étanchéité (16) et de l'élément de précontrainte (15), et/ou
h) l'élément d'étanchéité (13, 14) dépasse radialement vers l'intérieur du corps de base d'étanchéité (16), et/ou
i) le joint de piston (11, 12) est constitué exactement de quatre pièces, à savoir les deux éléments d'étanchéité (13, 14), l'élément de précontrainte (15) et le corps de base d'étanchéité (16), ou
j) le joint de piston est constitué exactement de trois pièces, à savoir l'élément d'étanchéité, l'élément de précontrainte et le corps de base d'étanchéité.
